Europäisches Patentamt

**European Patent Office**

**Office européen des brevets**

(11) Numéro de publication: **0 025 756 B1**

(12) **FASCICULE DE BREVET EUROPEEN**

(45) Date de publication du fascicule du brevet: **06.02.85**

(21) Numéro de dépôt: **80401280.5**

(22) Date de dépôt: **08.09.80**

(51) Int. Cl.⁴: **G 05 D 23/30, H 05 B 3/00**

(54) Circuit de réglage de la température d'un four de cuisson, notamment à usage domestique.

(30) Priorité: **10.09.79 FR 7922548**

(43) Date de publication de la demande:
**25.03.81 Bulletin 81/12**

(45) Mention de la délivrance du brevet:
**06.02.85 Bulletin 85/06**

(84) Etats contractants désignés:
**BE DE GB IT NL**

(56) Documents cités:
**DE-A-2 045 438**
**DE-A-2 212 157**
**FR-A-2 042 785**
**NL-C- 76 054**
**US-A-3 605 875**
**US-A-3 979 708**

(73) Titulaire: **DE DIETRICH & Cie, Société dite**
**F-67110 Niederbronn-Les-Bains (FR)**

(72) Inventeur: **Gresse, Roland**
**17, Rue des Marguerites Gundershaffen**
**F-67110 Niederbronn-les-Bains (FR)**

(74) Mandataire: **Bressand, Georges et al**
**c/o CABINET LAVOIX 2 Place d'Estienne d'Orves**
**F-75441 Paris Cedex 09 (FR)**

Courier Press, Leamington Spa, England.

## Description

La présente invention concerne les fours électriques de cuisson, notamment à usage domestique et, plus particulièrement, un circuit de réglage de la température de tels fours.

On connaît déjà un tel four dans lequel on peut faire varier la répartition de l'énergie fournie à la cavité par la voûte et par la sole. Dans ce cas, on ne peut plus se contenter, pour commander la régulation de la température du four, d'un seul capteur placé à proximité de l'un ou de l'autre des éléments chauffants sous peine de voir varier de façon inadmissible l'amplitude des oscillations de la température du four, autour d'une valeur de consigne déterminée notamment par le réglage de la répartition.

Pour éviter cette difficulté, il est déjà connu d'associer un capteur à chaque élément chauffant, et de combiner les capteurs ainsi agencés de telle sorte qu'ils fournissent ensemble un signal représentant la température moyenne mesurée du four. Cependant l'énergie de chauffage étant souvent produite tant dans la voûte que dans la sole, par plusieurs éléments qui peuvent être commutés au choix de l'utilisateur suivant les mets à cuire, cette solution s'avère onéreuse, chaque élément étant associé à un capteur individuel. La multiplication des capteurs influe ainsi défavorablement sur le prix de revient du circuit de réglage.

Par ailleurs, dans les systèmes de régulation de température, il est connu d'une façon générale, de disposer près du capteur de température un élément chauffant qui est mis en marche en même temps que les éléments assurant le chauffage de l'enceinte desservie par le système de régulation. Cet élément chauffant, qui est le plus souvent une petite résistance électrique, accélère l'influence qu'a le capteur sur la boucle de réglage ou, en d'autres termes, il réduit l'écart entre les températures maximale et minimale régnant dans l'enceinte et maintient donc la température instantanée aussi près que possible de la température de consigne.

L'utilisation d'une telle résistance "d'accélération" est fréquente dans les installations de chauffage électrique par exemple (voir notamment le DE 2.045.438), dans lesquelles habituellement la plage de variation de la température s'étend tout au plus sur une dizaine de degrés. La présence de la résistance donne alors des résultats satisfaisants.

Dans les fours de cuisson à usage domestique, on doit pouvoir faire varier la température dans une gamme nettement plus étendue pour pouvoir l'adapter à tous les mets que l'on fait cuire dans le four. Cette gamme peut s'étendre de 50°C à 300°C, par exemple.

Or, il s'est avéré que les oscillations de la température autour d'une valeur de consigne donnée et introduite dans la boucle de réglage, sont bien plus importantes à basse qu'à haute température, même en présence d'une résistance chauffant le capteur pour en accélérer l'influence.

L'invention a pour but de fournir un circuit de réglage qui permette, tout en ne comportant qu'un seul capteur de température, de réduire les oscillations de la température autour de la valeur de consigne dans toute la gamme d'utilisation d'un four de cuisson quel que soit le nombre d'éléments de chauffage utilisés dans celui-ci.

L'invention telle qu'elle est definie dans les revendications a donc pour objet un circuit de réglage d'un four de cuisson, notamment à usage domestique qui est chauffé par au moins un élément de chauffage commandé en fonction de la température par une boucle de réglage qui comporte un capteur unique pour fournir la valeur instantanée de la température régnant dans le four et des moyens de chauffage placé prés du capteur pour un accélérer l'effet sur la régulation, ce circuit étant ainsi structuré que lesdites moyens de chauffage sont agencés de telle manière que la chaleur qu'ils dégagent décroisse au fur et à mesure que la température du four augmente.

Il résulte de ces caractéristiques que l'effet correcteur subi par le capteur de température en raison de la présence des moyens de chauffage diminue dans la plage des hautes températures, tandis qu'au contraire dans la plage des faibles températures, cet effet augmente. L'écart entre les températures maximale et minimale se présentant de part et d'autre d'une température de consigne donnée peut alors être égal sur pratiquement toute la plage de températures du four.

Les moyens de chauffage associés au capteur sont formés par une résistance électrique dite d'accélération dont le coefficient de température assure la décroissance de la quantité de chaleur dégagée avec l'augmentation de la température.

Ladite résistance électrique d'accélération est alimentée par une source de tension constante et la matériau dont elle est constituée présente une résistance à coefficient de température positif.

La résistance est réalisée en un métal dont la plage de températures est compatible avec celle du four, tel que la platine.

Suivant une autre caractéristique, particulièrement avantageuse, le capteur de température et la résistance d'accélération sont tous deux en un métal à résistance à coefficient de température positif, les deux composants étant prévus sur une même plaquette de support par gravure d'une couche de ce métal appliquée sur ladite plaquette.

Cette caractéristique particulière de l'invention permet de réaliser une économie considérable lors de la réalisation de la boucle de réglage, car, la sonde de température étant commodément réalisée classiquement sur une plaquette par gravure d'une couche de métal, il est très aisé, sans pour autant augmenter le prix de revient, de graver à côté de la sonde un second composant formant ladite résistance d'accélération.

D'autres caractéristiques de l'invention apparaîtront au cours de la description qui va suivre, donnée uniquement à titre d'exemple et faite en se référant aux dessins annexés sur lesquels:

— la Fig. 1 est un schéma simplifié d'un circuit de réglage pour four de cuisson, suivant l'invention;
— la Fig. 2 montre une plaquette comportant un élément formant capteur de température et un élément constituant la résistance d'accélération pour chauffer ce capteur;
— la Fig. 3 est un diagramme de la température du four en fonction du temps, illustrant l'effet de la résistance d'accélération sur la régulation, grâce à la mise en oeuvre de l'invention;

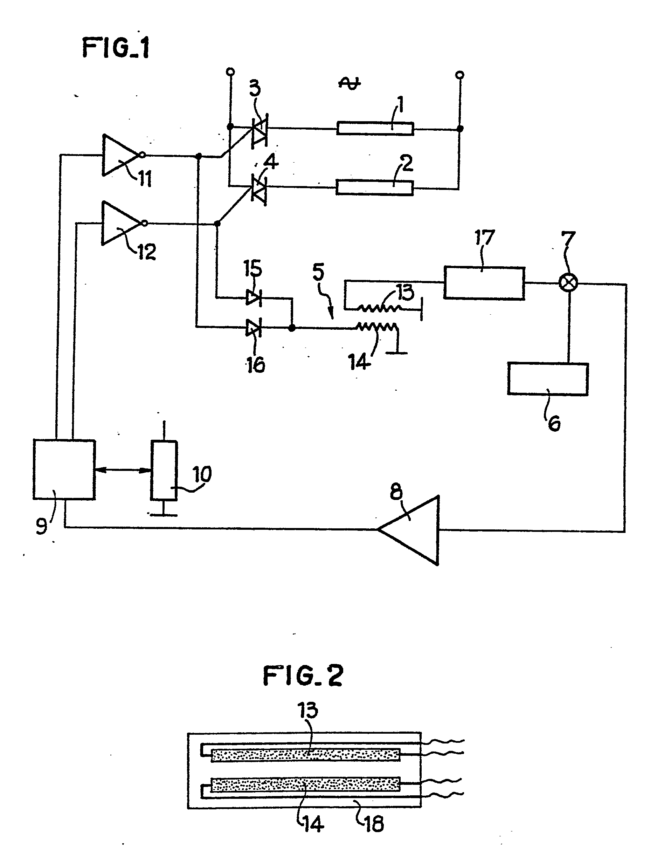

Le schéma simplifié de la Fig. 1 montre deux éléments chauffants 1 et 2 placés respectivement dans la voûte et la sole d'un four de cuisson, à usage domestique notamment. Chaque élément est monté en série avec un triac 3, 4 sur un réseau d'alimentation tel que le secteur par exemple.

Les éléments chauffants 1 et 2 sont commandés par une boucle de réglage 5 qui comprend tout d'abord, un organe d'affichage 6 de la valeur de consigne de température. Cet organe d'affichage 6 est relié à un comparateur 7 dont la sortie est connectée, par l'intermédiaire d'un amplificateur 8 à un basculeur bistable 9. Ce dernier est destiné à assurer la répartition de la chaleur dégagée par les éléments 1 et 2 dans l'enceinte du four par une mise en marche sélective et alternée de ces éléments. Le rapport cyclique du basculeur bistable 9 peut être réglé à l'aide d'un organe de commande 10, afin d'adapter le régime de chauffage aux mets à cuire.

Les deux sorties du basculeur 9 sont appliquées respectivement à des amplificateurs 11 et 12 qui attaquent à leur tour les électrodes de commande des triacs 3 et 4.

Le signal correspondant à la valeur instantanée de la température du four est détecté par une résistance 13 formant capteur de température, qui est, de préférence, en un métal ayant une résistance à coefficient de température positif, compatible avec la gamme de températures pouvant se présenter dans le four. Le capteur 13 est placé a voisinage immédiat de moyens de chauffage qui dans cet exemple sont formés par une autre résistance 14 afin d'accélérer l'effet du capteur 13 sur la régulation de la boucle 5.

A cet effet, la résistance 14 est alimentée en tension constante par l'intermédiaire de diodes 15 et 16 qui sont connectées respectivement aux sorties des amplificateurs 11 et 12.

Le capteur 13 fournit un signal à un circuit de mesure 17 qui attaque la seconde entrée du comparateur 7.

La résistance d'"accélération" 14 est réalisée en un matériau conducteur ayant une résistance dont le coefficient de température assure la décroissance de la quantité de chaleur qu'elle dégage, au fur et à mesure que la température du four augmente; dans le cas représenté, ce coefficient est positif. La résistance est de préférence en platine, comme le capteur 13, bien que l'on puisse envisager d'autres matériaux, tels que par exemple le nickel, l'aluminium, un alliage fer-nickel et d'une façon générale tout matériau compatible avec la gamme de températures régnant dans le four. L'homme de métier verra immédiatement que dans la mesure où la résistance d'accélétion est alimentée en courant constant elle doit avoir un coefficient de température négatif.

Si la sonde 13 et la résistance 14 sont réalisées en un même métal tel que le platine, on peut avantageusement utiliser, comme représenté sur la Fig. 2, une plaquette isolante 18 sur laquelle elles sont gravées par exemple au laser, à partir d'une couche de ce métal déposée au préalable sur la plaquette. Celle-ci peut alors être placée sur une paroi de l'enceinte du four. A titre indicatif, les valeurs de la sonde 13 et de la résistance 14 peuvent toutes deux être égales à 100 ohms.

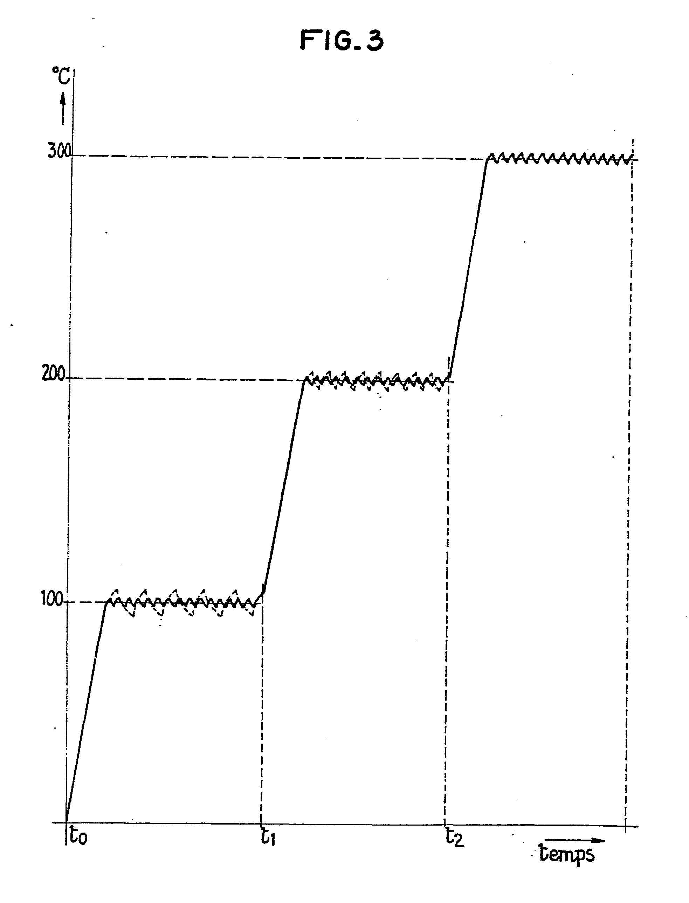

La Fig. 3 illustre le fonctionnement du circuit de régulation suivant l'invention. La courbe montre l'allure de la température au sein du four, le tracé en traits fins correspondant à l'utilisation d'une boucle de réglage classique tandis que l'on a représenté en traits gras comment évolue la température avec une résistance d'accélération connectée suivant l'invention.

Lors de la mise en marche du four ($t_0$), la température atteint rapidement la valeur affichée qui est de 100°C, par exemple. La boucle de réglage 5 fair en sorte que la température oscille autour de cette valeur avec une amplitude donnée qui, lorsque l'on associe comme dans le technique classique une simple résistance au capteur 13, est réduite à une certaine valeur (5% par exemple). On peut constater que, toujours avec une telle résistance classique, cette amplitude n'est plus aussi importante lorsque l'utilisateur aux temps $t_1$ ou $t_2$ affiche d'autres températures du four (200°C et 300°C par exemple). En effet, l'amplitude diminue au fur et à mesure que la température du four augmente. La résistance d'accélération particulière de l'invention, permet de moduler son influence sur le capteur 13 de telle sorte que l'amplitude pour les plages inférieures soit pratiquement aussi faible que pour les plages supérieures. En effet, la puissance dissipée par la résistance 14 décroît en fonction de la température en son action sur la sonde 13 conduit finalement à diminuer l'influence de celle-ci au fur et à mesure que la température augmente.

En définitive, on obtient donc une régulation fine autour du point de consigne dans toute la plage de travail du four.

Dans l'exemple qui vient d'être décrit, les moyens de chauffage associés au capteur imposent à celui-ci une variation de l'échauffement qui est provoquée par le coefficient de température de la matière résistive dont ils sont constitués.

## Revendications

1. Circuit de réglage d'un four de cuisson notamment à usage domestique qui est chauffé par au moins un élément de chauffage (1, 2) commandé en fonction de la température par une boucle de réglage (3, 4, 6 à 13) qui comporte un capteur unique de température (13) placé dans le four pour fournir la valeur instantanée de la température régnant dans celui-ci, une résistance d'accélération (14) placée près du capteur et des moyens permettant d'accentuer l'influence de l'accélération dans la partie basse de la plage de régulation du circuit, ce dernier étant caractérisé en ce que les fonctions de résistance d'accélération et de moyens d'accentuation sont assurées par une seule et même résistance (14) à coefficient de température positif réalisé en un métal choisi dans le groupe formé par le platine, le nickel, l'aluminium, et un alliage fer-nickel et en ce que cette résistance est alimentée par une source de tension constante (11, 12, 15, 16).

2. Circuit suivant la revendication 1, caractérisé en ce que le capteur de température (13) et la résistance d'accélération (14) sont toutes deux en un métal à résistance à coefficient de température positif, les deux composants étant prévus sur une même plaquette de support (18) par gravure d'une couche de ce métal appliquée sur ladite plaquette (18).

## Patentansprüche

1. Regelungsschaltung für einen Backofen, der insbesondere für den häuslichen Gebrauch bestimmt ist und mittels mindestens einem Heizelement (1, 2) beheizt wird, das in Abhängigkeit von der Temperatur über eine Regelschleife (3, 4, 6—13) geregelt wird, wobei die Regelschleife

— einen einzigen im Backofen angeordneten Temperaturfühler (13) zum Liefern der in diesem herrschenden Temperatur,
— einen in der Nähe des Fühlers angeordneten Beschleunigungs-Widerstand (14) und
— Mittel zum Erhöhen des Beschleunigungseinflusses im unteren Bereich des Regelbereichs der Schaltung aufweist, dadurch gekennzeichnet, daß

— die Aufgabe des Beschleunigungs-Widerstands und der Mittel zum Erhöhen des Beschleunigungseinflusses durch einen einzigen Widerstand (14) mit positiven Temperaturkoeffizienten erfüllt werden, der aus einem aus der Gruppe der Metalle Platin, Nickel und Aluminium gewählten Metall und einer Nickel-Eisenlegierung hergestellt ist, und
— dieser Widerstand von einer Konstantspannungsquelle (11, 12, 15, 16) gespeist wird.

2. Regelungsschaltung nach Anspruch 1, dadurch gekennzeichnet, daß

— der Temperaturfühler (13) und der Beschleunigungswiderstand beide aus einem Metall mit positiven Temperaturkoeffizienten bestehen, und
— die beiden Bauelemente auf derselben Trägerplatte (18) durch Gravur einer auf diesen Träger (18) angebrachten Metallschicht angeordnet sind.

## Claims

1. Circuit for regulating a cooking oven, in particular for household use, which is heated by at least one heating element (1, 2) which is controlled in accordance with the temperature by means of a regulating loop (3, 4, 6 to 13) which comprises a single temperature detector (13) placed in the oven so as to provide the instantaneous value of the temperature prevailing in the oven, an acceleration resistance (14) placed close to the detector, and means for accentuating the effect of the acceleration in the lower part of the range of regulation of the circuit, the latter being characterised in that the functions of acceleration resistance and accentuation means are performed by one and the same resistance (14) having a positive temperature coefficient and made from a metal selected from the group formed by platinum, nickel, aluminium and an iron-nickel alloy, and this resistance is fed by a source of constant voltage (11, 12, 15, 16).

2. Circuit according to claim 1, characterised in that the temperature detector (13) and the acceleration resistance (14) are both of a resistance metal having a positive temperature coefficient, the two components being provided on a common support plate (18) by engraving a layer of said metal applied to said plate (18).

**FIG_1**

**FIG_2**

# FIG. 3